# FASCICULE DE BREVET EUROPEEN

(11) **EP 1 664 260 B1**
(45) Date de publication et mention de la délivrance du brevet: **12.05.2010**
(21) Numéro de dépôt: 04766580.7
(22) Date de dépôt: 24.08.2004
(51) Int. Cl.: C12G 1/00, A23N 15/02, A23N 4/10

(54) **EXTRACTEUR DE PEPINS DE RAISIN**
EXTRAKTIONSVORRICHTUNG FÜR WEINTRAUBENKERNE
RAISIN SEED EXTRACTOR

(30) Priorité: 03.09.2003 FR 0310401
(43) Date de publication de la demande: 07.06.2006
(73) Titulaire: Cortiade, Jean Michel, 31420 Francon (FR)
(72) Inventeur: Cortiade, Jean Michel, 31420 Francon (FR)
(74) Mandataire: Ravina, Bernard
(86) Numéro de dépôt international: PCT/EP2004/051884
(87) Numéro de publication internationale: WO 2005/023976

(56) Documents cités:
- AT-B- 364 478
- AU-B2- 525 238
- FR-A- 2 539 337
- FR-A1- 2 608 073
- US-A- 5 012 731

## Description

La présente invention concerne un extracteur de pépins de raisin d'un produit constitué de raisins écrasés et égrappés préparés pour la fermentation en cuve lors de la fabrication du vin. Un tel extracteur est décrit dans FR 2 608 073.

La présence de pépins de raisin pendant la fermentation en cuve pour la fabrication du vin transmet au vin issu de cette fermentation certaines caractéristiques finales de saveur et de parfum indésirables d'autant plus prononcées que la concentration en pépins est plus importante. L'enlèvement de tout ou partie des pépins présente un très grand intérêt pour l'amélioration de la qualité de certains grands crus et de certains vins courants.

L'extraction de ces pépins est rendue difficile par le fait :
- Que ces pépins ont sensiblement la même densité que le mélange environnant
- Que pour certaines variétés de raisins la pulpe du fruit adhère aux pépins et qu'il est impératif de réintégrer cette pulpe au mélange pour la fermentation
- Que l'écrasement des grains de raisin avant introduction dans la cuve de fermentation doit être fait de façon à ne pas briser des pépins ce qui accroîtrait l'effet néfaste de leur présence.

Il en résulte qu'on ne peut pas dissocier complètement pulpe, peau de raisins, pépins pour effectuer facilement l'élimination de ces derniers.

Les appareils actuellement utilisés en vinification pour extraire les pépins font appel à un principe général connu sous le nom de délestage. Il consiste pendant la phase de fermentation à soutirer périodiquement la partie liquide de la cuve, une petite quantité de pépins entraînés par le liquide est extraite, d'une part par tamisage, d'autre part par des grilles de piégeage en fond de cuve permettant d'en extraire une autre petite quantité. La majorité des pépins reste néanmoins prisonniers dans le substrat en fond de cuve. Diverses méthodes sont utilisées pour briser ce substrat avant ou pendant la réintroduction du liquide dans la cuve, soit par action mécanique sur ce substrat soit par effet hydraulique résultant de l'impact de la chute brutale de liquide ou d'un jet de liquide sur ce substrat. Ces opérations doivent être répétées une ou deux fois par jour pendant la phase de fermentation et sont une contrainte importante.

L'extracteur de la présente invention s'intègre dans la chaîne de préparation et manutention du produit à fermenter avant son introduction dans la cuve de fermentation. Dans ce cas, il donne un résultat suffisant pour certaines variétés de raisins. Pour d'autres variétés plus difficiles à traiter l'extracteur devra être utilisé après un début de fermentation qui aura davantage séparé pulpe et pépins. Dans ce cas, il sera nécessaire après soutirage du liquide d'extraire le substrat de la cuve pour lui faire subir le traitement par l'extracteur objet de la présente invention avant de le réintroduire dans la cuve pour continuer la fermentation. Cette opération ne se fera néanmoins qu'une fois au plus dans la durée de la fermentation.

L'extracteur reprend le flux de produits constitué des raisins issus de la vendange provenant des vignobles, traités dans une chaîne de préparation et manutention après l'écrasement des raisins et l'enlèvement des rafles (égrappage).

L'extracteur groupe en un seul appareil la réalisation de deux phases successives de traitement, égouttage et séparation, présentant l'avantage de n'introduire le produit et de ne le récupérer qu'une seule fois, le transit intérieur d'une phase à l'autre tirant avantage des vitesses et débit de produit à la sortie de la phase amont pour alimenter sans choc la phase suivante. La dégradation du produit très délicat traité dans ce cas s'en trouve réduite de façon très appréciable.

L'extracteur comprend sur un même axe géométrique légèrement incliné sur l'horizontale deux tambours tournants :
- Un tambour égoutteur perforé tournant à grande vitesse pour débarrasser au maximum le produit de ses liquides.
- Un tambour séparateur perforé qui extrait les pépins, ce tambour existe en deux versions rapidement interchangeables, différentes seulement par la forme des perforations dépendant des caractéristiques du produit à traiter.

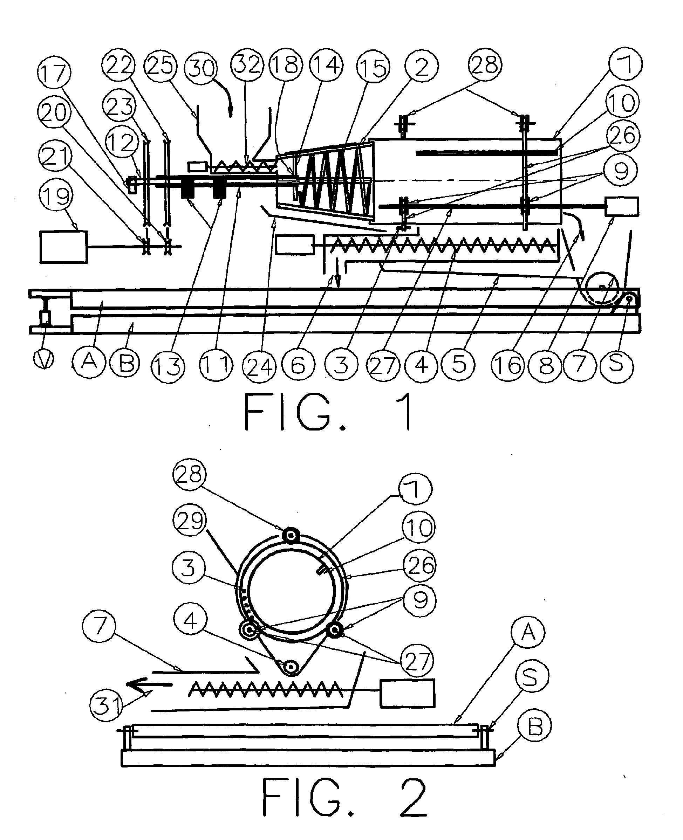

Les figures 1 et 2 représentent de façon schématique de face et de profil une réalisation de l'extracteur de pépins de la présente invention.

En se référant à la figure 1, le tambour égoutteur 2 de forme tronconique est constitué d'une tôle perforée de trous ronds ou oblongs d'une largeur inférieure à 2 mm permettant le passage du liquide mélangé au produit, elle est enroulée en tronc de cône de section circulaire d'axe xx' sensiblement horizontal, l'angle total au sommet du cône étant de 16 à 20 degrés environ. Côté petite base la tôle du cône est lisse non perforée sur une courte distance suivant les génératrices, le produit arrivant en 30 dans la goulotte 25 est poussé par la vis sans fin 32 à l'intérieur du tronc de cône du tambour égoutteur 2 sur la partie lisse côté petite base, tombe sur la paroi intérieure tournant à grande vitesse et sous l'effet du frottement sur la partie lisse va prendre progressivement la vitesse du tambour. Sous l'effet combiné de la force centrifuge et de la conicité du tambour le produit va progresser vers la grande base du cône du tambour égoutteur 2. La partie lisse a pour but de faciliter le glissement du produit le long de la circonférence du tambour pour éviter son entraînement trop rapide en rotation diminuant ainsi sa détérioration. Des bras 14 de support de ce tambour se trouvent en aval de la partie lisse, le produit va passer entre eux pour arriver dans la zone perforée, la force centrifuge va activer la séparation du liquide qui va s'évacuer à travers les perforations. Afin de contrôler la progression du produit vers la sortie, une vis sans fin 15 s'ajustant sur la paroi intérieure du cône du tambour égoutteur 2 tourne avec ce dernier à une vitesse légèrement inférieure de sorte qu'elle pousse le produit vers la grande base du cône du tambour. En agissant sur la différence de vitesse entre tambour égoutteur 2 et vis sans fin 15 on règle de façon non indépendante le débit de l'appareil et le taux d'égouttage. Les parties liquides sont recueillies en partie basse sous le tambour égoutteur 2 par un collecteur 24 et sont acheminées vers la sortie de l'appareil. Un carter fixe en tôle non représenté enveloppe le tambour égoutteur 2 pour collecter les gouttelettes projetées par la force centrifuge et les laisse tomber à la partie inférieure dans le collecteur 24.

Le tambour séparateur 1 est constitué d'une tôle perforée de trous cylindriques de 7 à 8,5 millimètres de diamètre, suivant les variétés de raisins. Ces trous sont soit ordinaires disposés en quinconce au pas de 11 mm environ pour les fruits à pulpe adhérente, soit au même pas et percés de l'intérieur vers l'extérieur de façon à réaliser un chanfrein arrondi sur le bord intérieur et éventuellement une bavure à l'extérieur. Ce tambour séparateur 1 a un diamètre légèrement supérieur à celui du tambour égoutteur 2 et le recouvre légèrement de façon à récupérer sans pertes le produit sortant du tambour égoutteur 2 projeté tangentiellement par rapport à sa circonférence par la force centrifuge. Afin de ne pas détériorer ce produit arrivant à grande vitesse, la partie du tambour séparateur 1 dans cette zone de réception est lisse sans perforations sur une longueur de 0,15 à 0,30 mètre environ suivant les génératrices. Le produit animé d'un mouvement tangentiel par rapport au tambour égoutteur 2 glisse en tournant sur la partie intérieure du tambour séparateur 1 tournant beaucoup moins vite et se ralentit par frottement sans se détériorer.
L'axe xx' commun des tambours est légèrement incliné sur l'horizontale, sortie plus basse que l'entrée. Ce fait est sans incidence notable sur le tambour égoutteur 2 vu sa grande vitesse. Par contre dans le tambour séparateur 1 vu sa faible vitesse de rotation le produit ne reste pas collé à la paroi : il glisse partiellement et retombe avant d'atteindre la partie haute du tambour. Par effet de tamis, les pépins passent à travers les trous du tambour séparateur 1, le reste du produit retenu à l'intérieur comprenant surtout la peau et pulpe des raisins s'évacue vers la partie basse d'autant plus vite que la pente est plus forte, en agissant sur cette pente on règle le temps de séjour dans ce tambour séparateur 1, et également le débit et le taux de pépins extraits. Pour les faibles débits ou les variétés faciles à traiter, la longueur utile de la partie perforée du tambour séparateur 1 est réduite en tapissant la paroi intérieure de ce tambour côté sortie par une tôle fine et lisse cylindrique amovible, la longueur de ce cylindre amovible étant adaptée en fonction de la longueur de la partie perforée à laisser découverte et fonctionnelle. Ce cylindre amovible est formé par une tôle rectangulaire enroulée et non soudée de sorte que lorsqu'elle est déposée du tambour séparateur 1, elle reprend sa forme plane primitive et est moins encombrante. Un jeu de plusieurs tôles est ainsi constitué pour donner des longueurs de cylindre amovible différentes. Elles sont fixées à l'intérieur du tambour séparateur 1 par quelques boulons utilisant les perforations du tambour. Cette méthode évite dans ces derniers cas signalés d'incliner exagérément l'axe des tambours et de laisser frotter et détériorer inutilement le produit suffisamment traité sur les parties perforées du tambour séparateur 1. Pour tous les tambours séparateurs 1, les séparations entre parties perforées et lisses y compris pour la tôle amovible, se situent dans des plans perpendiculaires à l'axe commun des tambours. Une chicane 10 constituée par une lame d'une hauteur d'environ 3 à 5 cm disposée sur champ suivant une génératrice du tambour séparateur 1 à l'intérieur de ce dernier et dans sa partie perforée, d'une part accroche une partie du produit lors de son passage à la position basse, l'entraîne plus haut au cours de la rotation avant qu'il ne retombe en chute libre ce qui le désagrège périodiquement au lieu de le laisser continuellement glisser contre la paroi, et d'autre part, empêche que le produit ne s'agglomère en un tortillon tournant dans la partie basse du tambour séparateur 1, ce qui troublerait le fonctionnement.
Un carter fixe non représenté enveloppe la partie cylindrique du tambour séparateur 1 pour récupérer les pépins en partie basse. Ils sont évacués par un système classique à vis sans fin vers l'extérieur de l'extracteur à la sortie 6.
D'autres caractéristiques apparaîtront dans la description d'une réalisation particulière ci-après.
En référence aux dessins fig.1 et fig.2, le tambour égoutteur 2 est constitué par une tôle d'épaisseur 1,5 mm, perforée de trous de 2 mm de diamètre roulée pour former un tronc de cône creux d'une longueur d'un mètre, et de 0,80 m pour le grand diamètre et 0,50 m pour le petit. Côté petit diamètre la tôle n'est pas perforée sur 0,15 m suivant les génératrices du cône. Il est supporté par un arbre 11 tournant creux de diamètre extérieur 90 mm entraîné lui-même par :
- le moteur 19 à vitesse réglable solidaire du châssis A,
- le jeu de poulies réductrices 20 et 22,
- une courroie trapézoïdale reliant les poulies ci-dessus.
L'arbre 11 est supporté par les paliers 13 solidaires du châssis général A. Trois bras 14 situés dans un plan perpendiculaire à l'arbre 11 relient ce dernier au tronc de cône du tambour égoutteur 2. Ils sont boulonnés sur un anneau métallique circulaire fixé à l'extérieur du tambour égoutteur 2 au niveau de la transition partie lisse/partie perforée. Côté grand diamètre le tambour égoutteur 2 est supporté par trois galets disposés radialement à 120° par rapport à l'axe du tambour égoutteur 2 et solidaires du châssis A. Ils roulent sur un anneau fait d'un fer plat 6 x 40 roulé sur plat avec un diamètre intérieur de 0,80 m soudé à l'extrémité grand diamètre de la paroi perforée tronconique du tambour égoutteur 2. La face extérieure est la bande de roulement des galets ci-dessus. La vis sans fin 15 est constituée par un fer plat de section 5 x 80 mm cintré sur champ en 5 spires épousant l'intérieur du cône du tambour égoutteur 2 avec un jeu de 1mm, enroulée de façon que si elle tourne en sens inverse du tambour 2 elle pousse les produits emprisonnés entre ses spires vers la grande base de ce tambour. Elle est reliée par des bras à l'arbre 12 concentrique avec l'arbre 11, elle est entraînée en rotation par le moteur 19 et le jeu de poulies réductrices 23 identique à 22, et 21 cette dernière ayant un écartement de flasques réglable, donnent un rapport de réduction légèrement plus grand que celui du jeu de poulies 20, 22. Cet arbre 12 est supporté par le palier 17 solidaire du châssis général A et par le palier 18 situé entre l'arbre 12 et l'intérieur de l'arbre 11.
Ce tambour égoutteur 2 est alimenté par la goulotte 25 pénétrant légèrement à l'intérieur de ce tambour côté petite base. Cette goulotte comporte en fond une vis sans fin 32 pour gaver le tambour égoutteur 2 et est solidaire du châssis général A. Un carter fixe non représenté solidaire du châssis A entoure le tambour égoutteur 2 pour collecter les fragments de liquide extraits par ce tambour et les fait s'écouler dans le collecteur 24. Ce dernier est fait d'une tôle entourant extérieurement la moitié inférieure du tambour 2 avec un espace de 0,10 m entre les deux. Il comporte un rebord intérieur côté grand diamètre pour arrêter les liquides collectés. Il est fixé sur le châssis A et comporte à sa partie la plus base une tubulure horizontale transversale pour l'évacuation des liquides recueillis dans le collecteur de reprise 7 vers l'aval de l'extracteur.
Le tambour séparateur 1 est constitué d'une tôle d'épaisseur 1 mm perforée de trous évasés à l'intérieur se rétrécissant vers l'extérieur d'un diamètre de 8 mm, roulée pour constituer un cylindre de 0,90 mètre de diamètre et de 2 mètres de long. Il comporte un rebord intérieur circulaire de 20 mm à l'extrémité entrée attenant à une partie lisse sans trous sur 0,15 mètre de longueur suivant les génératrices se prolongeant par la partie perforée jusqu'à l'autre extrémité qui sera le côté sortie. A l'intérieur, la chicane est constituée par un fer plat de section 10 x 35 mm fixé sur champ suivant une génératrice du cylindre couvrant la partie perforée active du tambour séparateur 1. A l'extérieur, le cylindre perforé est renforcé par 2 anneaux circulaires 26 en fer plat de 10 x 40 mm d'un diamètre intérieur égal au diamètre extérieur du cylindre et fixés par points de soudure sur ce dernier perpendiculairement aux génératrices et à 0,40 mètre de chacune des extrémités. Ces anneaux sont utilisés pour supporter le tambour et l'entraîner en rotation à la vitesse de 17 tours / minute.
Un deuxième tambour 1 identique est fabriqué mais avec une tôle perforée de trous ordinaires de 8 mm de diamètre et non évasés comme dans le tambour précédent.
Le tambour séparateur 1 repose sur 4 galets 9 de diamètre 0,12 mètre par les anneaux 26 (2 galets par anneau). Chaque galet 9 comporte une gorge en forme de U de 12 mm de large dans laquelle circule un anneau 26. Ces galets 9 sont fixés par deux sur un arbre 27 de diamètre 25 mm tournant sur des paliers solidaires du châssis A et entraînés par un moteur 8. Deux arbres 27 identiques sont fixés sur le châssis A de sorte que les anneaux 26 s'engagent dans les gorges en U des galets 9. Ces arbres parallèles aux génératrices situées en partie basse du tambour séparateur 1 sont vus sous un angle de 90 degrés l'un de l'autre depuis l'axe commun des tambours. L'anneau 26 côté entrée est garni sur sa circonférence médiane d'environ quatre vingt dix sept axes 3 cylindriques diamètre 10 mm longueur 40 mm parallèles aux génératrices du tambour séparateur 1 régulièrement répartis pour avoir un pas de 31,75 mm et dépassant également de part et d'autre de l'anneau correspondant. Chacune des deux joues de l'un des galets 9 de chaque arbre 27 comporte des dents taillées de façon à former un pignon denté venant s'engrener dans les axes 3 pour améliorer l'entraînement du tambour séparateur 1. Un troisième arbre 28 identique sans moteur est positionné à la génératrice supérieure du tambour séparateur 1 pour terminer le guidage par un galet supplémentaire non représenté sur chaque anneau 26. Un carter 29 en tôle d'épaisseur 1 mm enveloppe l'ensemble sur la longueur correspondant à la partie perforée du tambour séparateur 1. Ce carter 29 et les paliers de l'arbre 28 sont supportés ensemble par deux portiques boulonnés sur le châssis A afin de faciliter l'échange des tambours séparateurs 1 en fonction des variétés de raisin à traiter. Le carter 29 à la partie inférieure se déverse dans une goulotte avec vis sans fin parallèle à l'axe des tambours pour évacuer les pépins à l'extérieur en 6. La partie inférieure de cette goulotte comporte des perforations pour laisser passer les liquides résiduels récupérés par le collecteur 5. Le carter 29 comporte à sa partie inférieure des parois inclinées à 45 degrés pour se raccorder à l'auget de la goulotte. A la sortie 16 du tambour séparateur 1 une goulotte 7 avec vis sans fin reçoit le produit traité appauvri en pépins pour le réintégrer en 31 dans la chaîne de traitement conventionnelle. Cette goulotte récolte également les écoulements liquides des collecteurs 24 et 5. Le châssis A supportant l'ensemble ci-dessus repose sur un autre châssis B posé au sol. Les châssis A et B sont articulés autour d'un arbre S dont l'axe côté sortie du tambour séparateur 1 est perpendiculaire à l'axe de ce tambour. Côté opposé à l'arbre S le châssis A est soulevé ou abaissé par rapport au châssis B par un vérin V permettant ainsi de régler l'inclinaison de l'axe commun de rotation des tambours 1 et 2 pour contrôler le débit et le taux d'extraction de pépins du tambour séparateur 1.

L'extracteur est utilisable pour la fabrication du vin pour en améliorer la qualité et diminuer les manutentions.

## Revendications

1. Extracteur de pépins de raisins pour enlever de façon continue les pépins contenus dans le produit constitué de raisins écrasés destinés à la fermentation pour la fabrication du vin, **caractérisé en ce qu'**il comprend en entrée un tambour égoutteur (2) tronconique perforé d'axe sensiblement horizontal tournant à grande vitesse pour extraire par centrifugation les parties liquides du produit, une vis sans fin qui contrôle la progression du produit à l'intérieur de ce tambour égoutteur et l'évacue dans un tambour séparateur (1) perforé de même axe que le tambour égoutteur (2), tournant à faible vitesse, les pépins passent à travers les perforations, tombent dans une goulotte (4) munie d'une sortie (6) servant à les évacuer, le produit traité retenu à l'intérieur du tambour séparateur (1) sort par une sortie (16) à l'extrémité opposée à l'entrée du tambour séparateur (1).

2. Extracteur suivant la revendication 1 **caractérisé en ce qu'**il comprend un vérin V qui modifie l'inclinaison de l'axe géométrique du tambour séparateur (1) pour ajuster le temps de traitement et le taux d'extraction de pépins.

3. Extracteur suivant la revendication 1 **caractérisé par** la présence d'une zone lisse à l'entrée du tambour séparateur (1) pour recueillir et freiner sans dommages le produit à traiter arrivant à grande vitesse.

4. Extracteur suivant les revendications 1 ou 3 **caractérisé par le fait que** le tambour séparateur (1) est constitué d'une tôle perforée de trous évasés sur la partie intérieure du tambour se rétrécissant vers l'extérieur ou ils forment une bavure.

5. Extracteur suivant la revendication 1 **caractérisé par** une zone lisse sur la partie intérieure d'entrée du tambour égoutteur (2) tournant à grande vitesse pour recevoir le produit sans vitesse initiale et l'amener sans dommages ni chocs à la grande vitesse de régime de la partie aval perforée de ce tambour.

6. Extracteur suivant les revendications 1 et 5 **caractérisé par** une vis sans fin épousant la forme intérieure du tambour égoutteur (2) et tournant à une vitesse différente de celle du tambour égoutteur (2) pour expulser régulièrement le produit.

7. Extracteur suivant la revendication 6 **caractérisé par** un système de poulies fixes (20, 22 et 23) et à diamètre variable (21) réglant la différentielle de vitesse entre le tambour égoutteur (2) et la vis sans fin (15) pour agir sur le débit de produit.

8. Extracteur suivant les revendications 1 à 4 **caractérisé par** un jeu de tôles lisses cylindriques amovibles tapissant la paroi intérieure perforée du tambour séparateur pour ajuster la longueur de la partie perforée aux caractéristiques du produit à traiter.

9. Extracteur suivant la revendication 1 **caractérisé par** une chicane intérieure au tambour séparateur (1) suivant une génératrice de ce tambour et sur la partie perforée qui désagrège périodiquement le produit pour faciliter la libération des pépins et éviter la mise en rouleau du produit.

## Claims

1. Raisin seed extractor for continuous removal of the seeds contained in the product consisting of crushed raisins intended for fermentation for wine-making, **characterized by** the fact that it includes at the infeed a truncated perforated drain drum (2) with an essentially horizontal axis , rotating at high speed to extract by centrifuging the liquid parts of the product, a worm screw which controls the progression of the product inside this drain drum and evacuates into a perforated separating drum (1) in the same axis as the drain drum (2), rotating at low speed, the seeds pass through the perforations, fall into a chute (4) and are evacuated at an exit (6), the treated product retained inside the separating drum (1) exits at an exit (16) at the opposite end from the infeed side of the separating drum (1).

2. Extractor according to claim 1 **characterized by** the fact that it includes a jackscrew V which modifies the incline of the geometric axis of the separating drum (1) in order to adjust the processing time and the rate of seed extraction.

3. Extractor according to claim 1 **characterized by** the presence of a smooth area at the infeed end of separating drum (1) in order to receive and slow down without damaging it the product to be processed which arrives at a high speed.

4. Extractor according to claims 1 or 3 **characterized by** the fact that the separating drum (1) is comprised of a sheet of metal perforated with the holes which are flared on the inside of the drum and smaller on the outside where they form a burr.

5. Extractor according to claim 1 **characterized by** a smooth area on the inside part at the infeed of the drain drum (2) rotating at high speed to receive the product without initial speed and to bring it without damaging or shocking it up to the high operating speed of the downstream perforated portion of this drum.

6. Extractor according to claim 1 and 5, **characterized by** a worm screw matching the inside shape of the drain drum (2) and rotating at a different speed from that of the drain drum (2) in order to continuously expel the product.

7. Extractor according to claim 6 **characterized by** a fixed system of sheaves (20, 22 and 23) and a system of sheaves (21) with a variable diameter regulating the speed differential between the drain drum (2) and the worm screw (15) to control the product flow.

8. Extractor according to claims 1 to 4, **characterized by** a set of smooth cylindrical detachable metal sheets lining the perforated inside wall of the separating drum to adapt the length of the perforated portion to the characteristics of the product to be processed.

9. Extractor according to claim 1 **characterized by** an interior baffle in the separating drum (1) following a generating line of this drum and on the perforated portion which periodically breaks up the product for facilitating the release of the seeds and preventing the formation of spiral-shaped product.

## Patentansprüche

1. Traubenkernentfernungsvorrichtung zur kontinuierlichen Entfernung der Kerne, die in dem Produkt enthalten sind, welches aus zerdrückten Weintrauben besteht, die für die Gärung zur Weinherstellung bestimmt sind, **dadurch gekennzeichnet, dass** sie eingangsseitig eine perforierte kegelstumpfförmige Abtropftrommel (2) mit im Wesentlichen horizontaler Achse, die sich mit hoher Geschwindigkeit dreht, um durch Zentrifugation den flüssigen Teil des Produkts zu gewinnen, umfasst sowie eine Endlosschnecke, welche die Fortbewegung des Produkts im Inneren dieser Abtropftrommel steuert und es in eine perforierte Trenntrommel (1) befördert, die dieselbe Achse wie die Abtropftrommel (2) aufweist und sich mit niedriger Geschwindigkeit dreht, wobei die Kerne durch die Perforationslöcher gelangen, in eine Rutsche (4) fallen, die mit einer Austrittsöffnung (6) versehen ist, die zur Abführung derselben dient, und das behandelte Produkt, das im Inneren der Trenntrommel (1) zurückgehalten wird, durch eine Austrittsöffnung (16), die sich an demjenigen Ende befindet, welches der Eintrittsöffnung der Trenntrommel (1) gegenüberliegt, austritt.

2. Entfernungsvorrichtung nach Anspruch 1, **dadurch gekennzeichnet, dass** sie einen Stellzylinder V umfasst, der die Neigung der geometrischen Achse der Trenntrommel (1) modifiziert, um die Behandlungsdauer und das Ausmaß der Entfernung der Kerne einzustellen.

3. Entfernungsvorrichtung nach Anspruch 1, **gekennzeichnet durch** das Vorhandensein eines glatten Abschnitts an der Eintrittsöffnung der Trenntrommel (1), um das zu behandelnde Produkt, das mit hoher Geschwindigkeit dort ankommt, aufzunehmen und ohne Schadwirkung zu bremsen.

4. Entfernungsvorrichtung nach den Ansprüchen 1 oder 3, **dadurch gekennzeichnet, dass** die Trenntrommel (1) aus einem Blech besteht, das mit Löchern perforiert ist, welche im Innenbereich der Trommel erweitert sind und sich nach außen hin verengen, wo sie einen Grat bilden.

5. Entfernungsvorrichtung nach Anspruch 1, **gekennzeichnet durch** einen glatten Abschnitt im eingangsseitigen Innenbereich der Abtropftrommel (2), die sich mit hoher Geschwindigkeit dreht, um das Produkt, dessen Geschwindigkeit anfänglich gleich null ist, aufzunehmen und ohne Schad- und Stoßwirkungen auf die hohe Drehgeschwindigkeit des nachfolgenden perforierten Bereichs dieser Trommel zu bringen.

6. Entfernungsvorrichtung nach den Ansprüchen 1 und 5, **gekennzeichnet durch** eine Endlosschnecke, die der Innenform der Abtropftrommel (2) angepasst ist und sich mit einer Geschwindigkeit dreht, die sich von derjenigen der Abtropftrommel (2) unterscheidet, um das Produkt in gleichförmiger Weise auszustoßen.

7. Entfernungsvorrichtung nach Anspruch 6, **gekennzeichnet durch** ein System fester Rollen (20, 22 und 23) und solchen mit variablen Durchmesser (21), zur Einstellung des Geschwindigkeitsdifferenzials zwischen der Abtropftrommel (2) und der Endlosschnecke (15), um die Durchsatzrate des Produktes zu beeinflussen.

8. Entfernungsvorrichtung nach den Ansprüchen 1 bis 4, **gekennzeichnet durch** einen Satz glatter zylindrischer Bleche, die abnehmbar sind und die perforierte Innenwand der Trenntrommel auskleiden, um die Länge des perforierten Bereichs an die Eigenschaften des zu behandelnden Produkts anzupassen.

9. Entfernungsvorrichtung nach Anspruch 1, **gekennzeichnet durch** eine Ablenkvorrichtung in Inneren der Trenntrommel, die einer Mantellinie dieser Trommel folgt und sich im perforierten Bereich befindet, um in regelmäßigen Abständen das Produkt aufzulockern, sodass die Freisetzung der Kerne erleichtert und die Bildung einer Rolle aus dem Produkt verhindert wird.
